Europäisches Patentamt

European Patent Office

Office européen des brevets

(11) Veröffentlichungsnummer: **0 093 308**

A2

(12) **EUROPÄISCHE PATENTANMELDUNG**

(21) Anmeldenummer: 83103758.5

(22) Anmeldetag: 19.04.83

(51) Int. Cl.³: **B 27 B 5/06**

(30) Priorität: 03.05.82 DE 3216441
12.02.83 DE 3304877

(43) Veröffentlichungstag der Anmeldung:
09.11.83 Patentblatt 83/45

(84) Benannte Vertragsstaaten:
AT CH FR IT LI NL

(71) Anmelder: REICH Spezialmaschinen GmbH
Postfach 1803 Plochinger Strasse 65
D-7440 Nürtingen(DE)

(72) Erfinder: Abt, Anton
Albstrasse 18
D-7446 Oberboihingen(DE)

(54) Plattensäge mit aufrechtem Gestell.

(57) Bei einer Plattensäge mit aufrechtem Gestell (1) weist der waagrecht verschiebbare Führungswagen (2) als Verbindung zwischen Wagenkopf (3) und Wagenfuß (4) einen Lagerbalken (5) und einen Anschlagbalken (6) auf, die beide aus handelsüblichem Rohr bestehen. Damit ergibt sich eine besonders einfache und billige Fertigung des Führungswagens (2), da zur Erzielung eines geraden Sägeschnitts nur wenig Bearbeitung und Nachstellung nötig ist.

EP 0 093 308 A2

./...

Fig. 1

20. Januar 1983
Reg.-Nr. 1.50/1

0093308

REICH Spezialmaschinen Gmbh, 7440 Nürtingen

---

Plattensäge mit aufrechtem Gestell

---

Die Erfindung betrifft eine Vorrichtung gemäß Oberbegriff von Anspruch 1.

Bei Plattensägen mit aufrechtem Gestell ist es bekannt, zur Ausführung des waagrechten Sägeschnitts einen Führungswagen parallel zum Gestell der Plattensäge waagrecht zu verschieben. Der zur Führung des Werkzeugschlittens dienende Lagerbalken wird dabei als zusammengesetzter Hohlbalken mit rechteckigem Querschnitt zumeist als Schweißkonstruktion hergestellt. Diese Herstellung ist aufwendig und teuer, die Führungsbahnen für den Werkzeugschlitten müssen dazuhin auf speziellen Langhobelmaschinen bearbeitet werden, was zu einer weiteren Verteuerung der Fertigung führt.

Aufgabe der vorliegenden Erfindung ist daher die Schaffung einer Plattensäge, deren Führungswagen einfach und billig herstellbar und zur Erzielung eines geraden Sägeschnitts mit einfachen Mitteln nachstellbar ist.

Diese Aufgabe wird erfindungsgemäß durch die im kennzeichnenden Teil des Anspruch 1 angegebenen Merkmale gelöst.

Durch die Verwendung eines handelsüblichen, vorzugsweise blankgezogenen Rohres mit kreisförmigem Querschnitt für den Lagerbalken und eines blankgezogenen Rohres mit rechteckigem Querschnitt für den Anschlagbalken ergibt sich eine außerordentlich einfache und billige Fertigung. Diese blankgezogenen Rohre weisen nämlich eine solche Genauigkeit auf, daß sie mit nur geringer Nacharbeit bzw. Nachstellung den für einen Führungsbalken geforderten Bedingungen bezüglich Querschnitt und Geradheit des Sägeschnitts genügen.

Die Führung des Werkzeugschlittens mit einem oberen und einem unteren
Satz von je drei Führungslagern in Form von Kugellagern ergibt eine
weitere Vereinfachung der Fertigung. Die genaue Einstellung auf eine
spielfreie Anlage am Lagerbalken wird erfindungsgemäß durch eine exzentrische Lagerung eines der Führungslager erzielt. Dieses Führungslager ist darüberhinaus auf einer verhältnismäßig langen und dünnen
Lagerachse so gelagert, daß es bei einer bestimmten Kraft geringfügig
ausweichen kann, wenn sich zwischen Führungslager und Lagerbalken
Sägespäne oder andere Fremdkörper befinden oder wenn der Lagerbalken
geringfügige Maßabweichungen aufweist.

Es kann auch vorkommen, daß der Lagerbalken eine geringfügige bogenförmige Krümmung aufweist. Diese Krümmung würde sich auf den Sägeschnitt übertragen und dessen Geradheit beeinträchtigen.

In Unteransprüchen wird dazu ein im Anschlagbalken angeordnetes Spannelement beansprucht, mit dem es möglich ist, die Krümmung des Führungsbalkens durch eine gewollte bogenförmige Verkrümmung des Anschlagbalkens
so zu kompensieren, daß das Sägeaggregat einen geraden Senkrechtschnitt
ausführt. Die einfache und billige Ausführung dieses Spannelements ergänzt die erfindungsgemäße Grundkonzeption einer einfachen und billigen
Plattensäge von hoher Schnittgenauigkeit.

Im folgenden ist ein Ausführungsbeispiel der Erfindung unter Bezugnahme auf die Zeichnungen näher beschrieben.

Es zeigen:

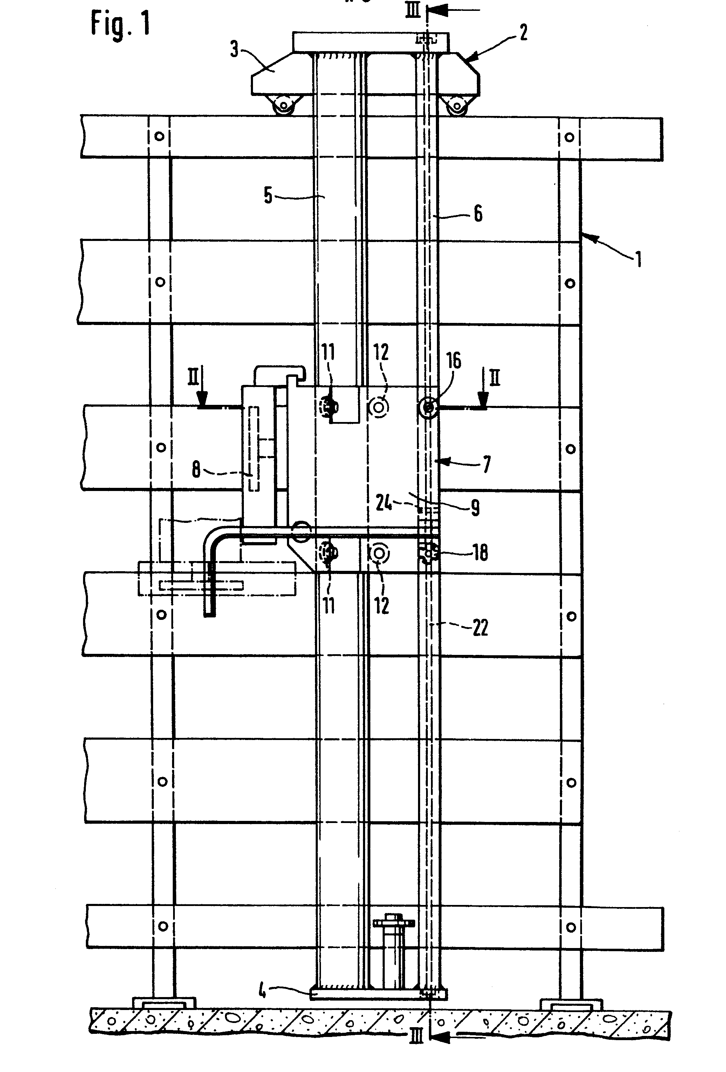

Fig. 1    Teil einer Plattensäge mit Führungswagen von vorne.

Fig. 2    Schnitt nach Linie II – II in Fig. 1.

Fig. 3    Schnitt nach Linie III – III in Fig. 1.

In einem aufrechten Gestell 1 einer Plattensäge ist ein Führungswagen 2 waagrecht verschiebbar gelagert. Der Führungswagen weist einen
Wagenkopf 3 und einen Wagenfuß 4 auf, zwischen denen ein Lagerbalken 5
und ein Anschlagbalken 6 angeordnet und mit ihren Enden mit Wagenkopf 3
und Wagenfuß 4 verschweißt sind. Sowohl Lagerbalken 5 als auch Anschlagbalken 6 bestehen aus handelsüblichen, blankgezogenen Rohren mit kreisförmigem bzw. rechteckigem Querschnitt.

Am Führungswagen 2 ist ein Werkzeugschlitten 7 in Höhenrichtung verschiebbar gelagert, an dem die senkrecht zur Auflagefläche von Gestell 1 verschiebbare Kreissäge 8 gelagert ist. Diese Kreissäge 8 läßt sich außerdem in bekannter Weise von einer senkrechten (ausgezogen gezeichnet) in
eine waagrechte (strichpunktiert gezeichnet) Arbeitsstellung verschwenken.

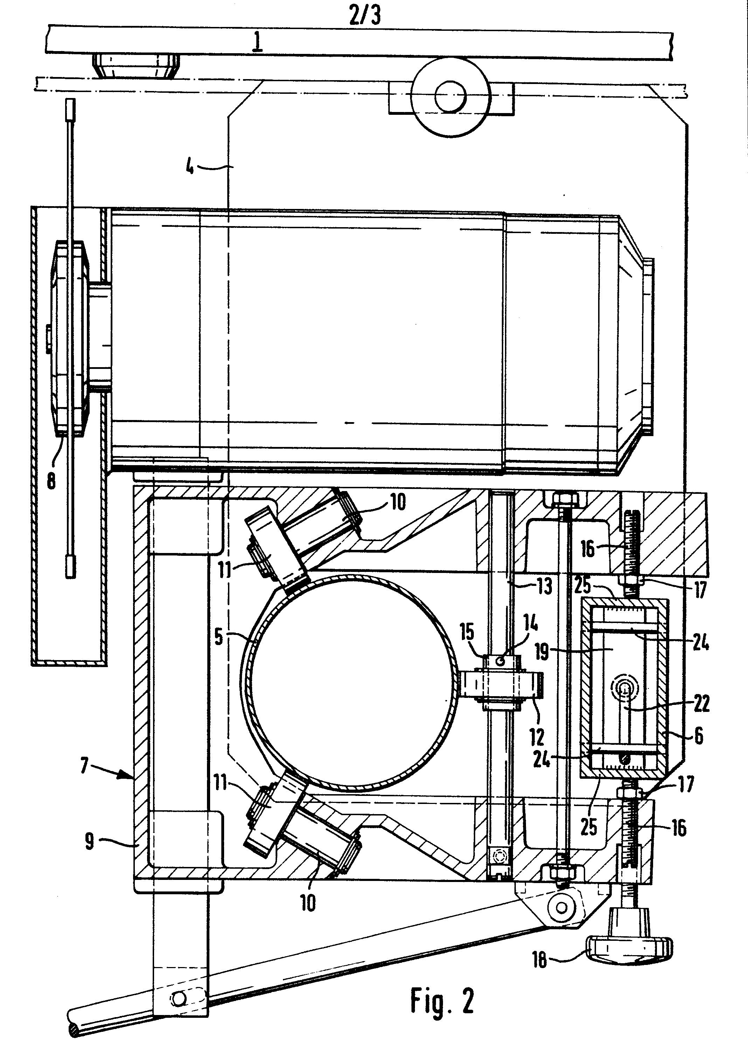

Wie auch Fig. 2 zeigt, sind im Schlittengehäuse 9 sowohl an dessen oberen
als auch unteren Ende an Zapfen 10 je zwei Führungslager 11 gelagert.
Ein weiteres Führungslager 12 ist auf einer verhältnismäßig langen Lagerachse 13 angeordnet, die mit ihren beiden Enden im Schlittengehäuse 9
gelagert ist, dazwischen jedoch eine verhältnismäßig große freie Länge
aufweist. Mit dieser Lagerachse 13 ist mit einem Stift 14 eine Exzenterbüchse
15 verbunden, auf der das Führungslager 12 aufgeschoben ist. Die Achse der
Bohrung der Exzenterbüchse 15 ist dabei so gegen die Achse seines Außenzylinders versetzt, daß sich bei einer Verdrehung der Lagerachse 13
das Führungslager 12 senkrecht zum Lagerbalken 5 verschieben läßt.

Die Führungslager 11 und 12 bilden zueinander je einen Winkel von 120°
und berühren mit ihrem Außenumfang die Oberfläche des Lagerbalkens 5.

Als Verschwenksicherung für den Werkzeugschlitten 7 dient der Anschlagbalken 6, an dem Einstellschrauben 16 aus Kunststoff anliegen. Sie sind
in dem Werkzeugschlitten 7 eingeschraubt und durch Gegenmuttern 17 gesichert. Während sich in der Nähe des oberen Endes des Werkzeugschlittens 7
zwei gleiche Einstellschrauben 16 gegenüberliegen, liegt der unteren Einstellschraube 16 zum Bedienungsmann gerichtet eine Klemmschraube 18 aus
Messing gegenüber, mit der sich der Werkzeugschlitten 7 bei der Ausführung von waagrechten Sägeschnitten am Führungswagen 2 festklemmen läßt.

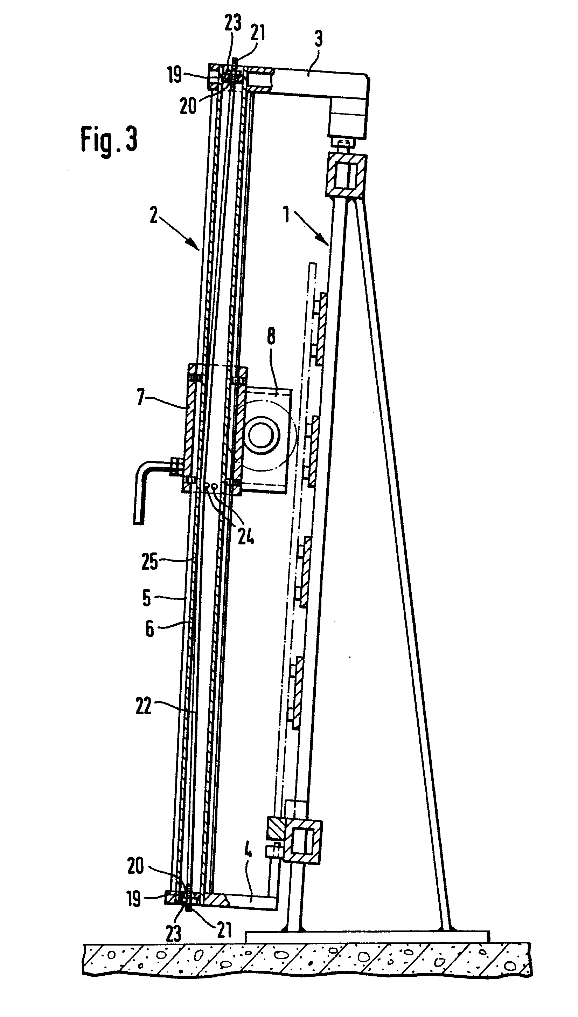

Wie insbesondere Fig. 3 zeigt, sind an beiden Enden von Anschlagbalken 6 Stege 19 vorgesehen, die mit Bohrungen 20 versehen sind.
Durch diese Bohrungen 20 erstrecken sich die Gewindeabschnitte 21
eines als Zugstange ausgebildeten Spannelements 22, das sich über
die ganze Länge des Anschlagbalkens 6 erstreckt und an seinen Gewindeabschnitte 21 mit Spannmuttern 23 versehen ist.

Wie auch Fig. 2 zeigt, sind in der Mitte von Anschlagbalken 6 in
der Nähe seiner Außenwände zwei Stifte 24 befestigt , wobei sich das
Spannelement 22 zwischen einem der Stifte und der Außenwand 25 des
Anschlagbalkens 6 erstreckt.

Da sich die beiden Bohrungen 20 genau in der Mittelachse des Anschlagbalkens 6 befinden, übt das Spannelement 22 beim Anziehen
der Spannmuttern 23 auf den einen Stift 24 eine Kraft senkrecht
zur Längsachse des Anschlagbalkens 6 in Richtung Gestell 1 aus
und verkrümmt den Anschlagbalken 6 bogenförmig. Damit kann eine
eventuelle Verkrümmung des Lagerbalkens 5 voll kompensiert werden
und ein gerader Sägeschnitt ist gewährleistet. Je nach Richtung
und Größe der Krümmung von Lagerbalken 5 wird das Spannelement 22
über den äußeren oder inneren Stift 24 gelegt und mehr oder weniger gespannt, so daß der Anschlagbalken die gewünschte bogenförmige
Krümmung annimmt.

20. Januar 1983 0093308
Reg.-Nr. 1.50/1

PATENTANSPRÜCHE

1) Plattensäge mit aufrechtem Gestell mit einer Auflagefläche für plattenförmige Werkstücke mit den Merkmalen

a) einem am Gestell waagrecht verschiebbaren Führungswagen

b) einem am Führungswagen in Höhenrichtung verschiebbar gelagerten Werkzeugschlitten und

c) einer am Werkzeugschlitten senkrecht zur Auflagefläche verschiebbar gelagerten Kreissäge

d a d u r c h   g e k e n n z e i c h n e t ,
daß der Führungswagen (2) einen Wagenkopf (3) und einen
Wagenfuß (4) aufweist, zwischen denen mindestens ein einstückiger, aus handelsüblichem Rohr bestehender Lagerbalken (5) zur verschiebbaren Lagerung des Werkzeugschlittens (7)
sowie ein dazu paralleler Anschlagbalken (6) befestigt ist, an dem
der Werkzeugschlitten (7) verschiebbar anliegt.

2) Plattensäge nach Anspruch 1,   d a d u r c h
g e k e n n z e i c h n e t   , daß zur Führung am Lagerbalken (5) im Werkzeugschlitten (7) mindestens drei Führungslager (11, 12) vorgesehen sind und daß eines der Führungslager (12) den Lagerbalken (5) mit einer in einem geringen
Maße elastisch nachgiebigen Kraft berührt.

3) Plattensäge nach Anspruch 2, d a d u r c h
g e k e n n z e i c h n e t , daß das elastisch nachgiebige Führungslager (12) auf einer Lagerachse (13) angeordnet ist, deren freiliegende Länge ein Mehrfaches der
Breite des Führungslagers (12) beträgt.

4) Plattensäge nach Anspruch 3, d a d u r c h
g e k e n n z e i c h n e t , daß mindestens ein
Führungslager (12) senkrecht zum Lagerbalken (5) einstellbar am Werkzeugschlitten (7) angeordnet ist.

5) Plattensäge nach Anspruch 4, d a d u r c h
g e k e n n z e i c h n e t , daß das Führungslager
(12) exzentrisch auf der einstellbaren Lagerachse (13)
angeordnet ist.

6) Plattensäge nach einem der Ansprüche 1 bis 5,
d a d u r c h  g e k e n n z e i c h n e t , daß
zur einstellbaren Anlage am Anschlagbalken (6) im
Werkzeugschlitten (7) Einstellschrauben (16) aus Kunststoff vorgesehen sind.

7) Plattensäge nach einem der Ansprüche 1 bis 6,
d a d u r c h  g e k e n n z e i c h n e t , daß
am Anschlagbalken (6) ein Spannelement (22) angeordnet
ist, das auf den Anschlagbalken (6) eine ihn senkrecht
zu seiner Längsachse elastisch verformende Kraft ausübt.

8) Plattensäge nach Anspruch 7, d a d u r c h
g e k e n n z e i c h n e t , daß das Spannelement
(22) im Innenraum des Anschlagbalkens (6) angeordnet
ist.

0093308

9) Plattensäge nach Anspruch 8, d a d u r c h
g e k e n n z e i c h n e t , daß das Spannelement (22)
an den beiden Enden (19) des Anschlagbalkens (6) spannbar
befestigt ist und daß es in seinem mittleren Bereich am
Anschlagbalken (6) außerhalb der Verbindungslinie
zwischen seinen Einspannpunkten angreift.

10) Plattensäge nach Anspruch 9, d a d u r c h
g e k e n n z e i c h n e t , daß im mittleren Bereich
des Anschlagbalkens (6) zwei einander gegenüberliegende
Stifte (24) vorgesehen sind, an denen das Spannelement
(22) wahlweise angreift.

11) Plattensäge nach Anspruch 10, d a d u r c h
g e k e n n z e i c h n e t , daß das Spannelement (22)
als Zugstab ausgebildet ist, der an mindestens einem
Ende einen Gewindeabschnitt (21) zur Aufnahme einer Spannmutter (23) aufweist.

Fig. 1

0093308

0093308

Fig. 2

0093308

Fig.3